**Europäisches Patentamt**

**European Patent Office**

**Office européen des brevets**

(19)

(11) Numéro de publication: **0 056 751 B1**

(12) **FASCICULE DE BREVET EUROPEEN**

(45) Date de publication du fascicule du brevet:
17.04.85

(51) Int. Cl.⁴: **B 65 G 49/06, B 65 D 85/48**

(21) Numéro de dépôt: **82400037.6**

(22) Date de dépôt: **11.01.82**

(54) **Pupitre de transport démontable pour des piles de feuilles de verre.**

(30) Priorité: **10.01.81 DE 3100599**

(43) Date de publication de la demande:
**28.07.82 Bulletin 82/30**

(45) Mention de la délivrance du brevet:
**17.04.85 Bulletin 85/16**

(84) Etats contractants désignés:
**BE FR IT LU NL**

(56) Documents cités:
**AT - B - 164 604**
**DE - C - 2 708 949**
**DE - U - 1 970 156**
**DE - U - 8 100 439**
**FR - A - 989 495**
**GB - A - 1 529 484**

(73) Titulaire: **SAINT-GOBAIN VITRAGE, Les Miroirs 18, avenue d'Alsace, F-92400 Courbevoie (FR)**

(72) Inventeur: **Huelsmann, Lothar, Pfarrer-Gaustrasse 15, D-5190 Stolberg (DE)**
Inventeur: **Roeben, Alfred, Aachener Strasse 287, D-5112 Baesweiler (DE)**
Inventeur: **Wissgens, Hans, Stettinerstrasse 49, D-5100 Aachen (DE)**
Inventeur: **Gillessen, Hubert, Weberstrasse 42, D-5100 Aachen (DE)**

(74) Mandataire: **Eudes, Marcel et al, Saint-Gobain Recherche 39 Quai Lucien Lefranc, F-93304 Aubervilliers Cedex (FR)**

BUNDESDRUCKEREI BERLIN

## Description

L'invention a pour objet un pupitre démontable pour le transport de piles de grands carreaux de verre, disposées sur chant, constitué d'au moins deux jambages ou bâtis espacés en forme de A, pourvus de semelles destinées à supporter une pile et de montants munis d'une surface inclinée où s'appuie cette pile, ces bâtis étant reliés par au moins deux longerons tubulaires qui y pénètrent pour s'assembler sur eux de façon amovible à la partie inférieure et dans la région supérieure.

Un pupitre de cette sorte, destiné au stockage de feuilles de verre, est décrit par le modèle d'utilité allemand DE 1 970 156. Ses jambages en forme de A sont porteurs de douilles à axe horizontal munies d'organes de pincement ou de serrage, à l'intérieur desquelles les tubes de liaison peuvent pénétrer. Dans cet exemple, la semelle des bâtis en question ne fait saillie que sur l'un des versants de sorte que le chargement ne peut s'effectuer que sur le côté correspondant. Sous cette forme, le pupitre ne se prête pas au transport.

On connait aussi des pupitres de ce type, qui présentent une structure symétrique, c'est-a-dire dont la semelle dépasse sur les deux versants de sorte que l'on peut y poser deux piles de verre inclinées l'une vers l'autre.

Ces pupitres servent au stockage et l'on ne recherche ni un assemblage solide et sûr des longerons sur les bâtis, ni un espacement précis entre ces derniers. Or ces deux points jouent un rôle important si l'on veut utiliser les pupitres pour le transport; les jonctions ont un rôle particulièrement important lorsqu'il faut transporteur des piles de carreaux de verre de grandes dimensions et d'un poids élevé allant jusqu'à 10 t, de sorte qu'un pupitre supporte jusqu'à 20 t de verre.

On connait aussi un pupitre de transport de verre, démontable, dans lequel deux bâtis en forme de A sont reliés par un longeron portant à ses extrémités des ceintures de fixation qui viennent s'enfiler sur les bâtis (brevet allemand DE-C3-2 708 949).

Démontés, les longerons sont cependant difficiles à manipuler et les ceintures de fixation placées à leurs extrémités prennent proportionellement beaucoup de place, de sorte que l'on en gagne peu à démonter le pupitre pour le stocker et l'expédier au retour.

A partir de cet état de la technique et tout en conservant comme élément de liaison entre les bâtis des tubes peu encombrants, l'invention a pour objet de donner à ces pupitres de transport une structure de nature à fournir un assemblage solide, sûr et que l'on puisse monter et démonter sans difficulté.

Selon l'invention, les longerons tubulaires sont munis, aux emplacements prévus pour leur assemblage sur les bâtis, de tenons de fixation extérieurs que l'on peut introduire à travers des lumières correspondantes ménagées sur les ouvertures de traversée des bâtis et mettre en prise longidutinale solide sur ces derniers, par rotation du tube à la mainère d'un emboîtement à baïonnette, et les bâtis portent un verrou immobilisant les longerons en rotation.

Au contraire des pupitres connus possédant une fixation par serrage, le pupitre de transport selon l'invention a pour avantages tout d'abord de permettre un assemblage relativement rapide et surtout d'être capable d'encaisser, selon d'axe des tubes de liaison, les efforts nuisibles qui peuvent apparaître, par exemple, lorsqu'on le déplace sous charge à l'aide d'une grue. D'autre part, les points de jonction se trouvent placés en des positions prédéterminées, impossibles à modifier, de sorte que les jambages se trouvent également toujours disposés de même manière ce qui réduit grandement les risques lors des manoeuvre effectuées à l'aide d'une grue, pour lesquelles généralement le pupitre est suspendu à un palonnier sur lequel les crochets de la grue eux-mêmes sont disposés commodément à espacements fixes.

D'autres caractéristiques et avantages de l'invention ressortent de la description ci-dessous d'un exemple préféré de mise en oeuvre, donnée en référence aux dessins qui montrent:

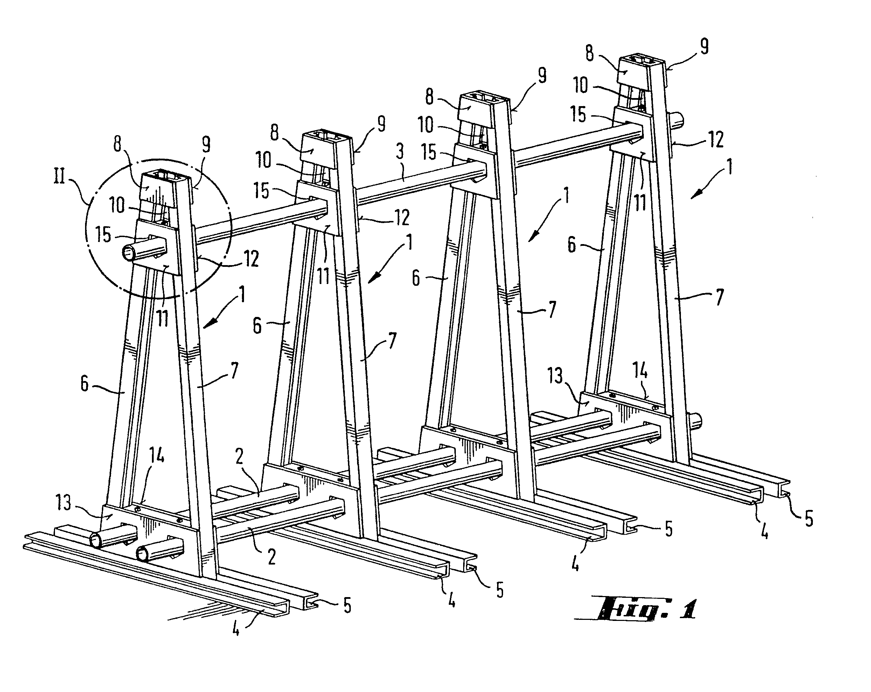

Figure 1: une perspective d'ensemble d'un pupitre de transport selon l'invention,

Figure 2: un premier mode d'exécution de la jonction entre longerons et bâtis dans la région de la partie supérieure,

Figure 3: un deuxième mode d'exécution de la jonction entre longerons et bâtis.

Le pupitre de transport représenté comprend quatre jambages ou bâtis 1 en forme de A solidarisés par trois longerons en tube de section circulaire 2 et 3. Les bâtis en A sont par exemple constitués de segments de profilés en U: deux poutrelles 4 et 5 forment la semelle sur laquelle les piles de feuilles de verre seront posées sur chant et deux poutrelles 6 et 7, légèrement inclinées l'une vers l'autre, serviront de faces d'appui à ces piles. En tête, les poutrelles 6 et 7 sont assemblées par des goussets 8 et 9 en dessous desquels se trouve une ouïe 10 qui fournira une prise pour le levage. En dessous de cette ouïe 10, deux plaques de tôle 11 et 12, soudées de part et d'autre sur les ailes des poutrelles 6 et 7 portent le palier d'assemblage du longeron supérieur 3; de même, au-dessus des poutrelles 4 et 5 de la semelle, deux autres tôles 13 et 14 portant les paliers des deux longerons inférieurs 2 sont soudées sur les deux profilés 6 et 7.

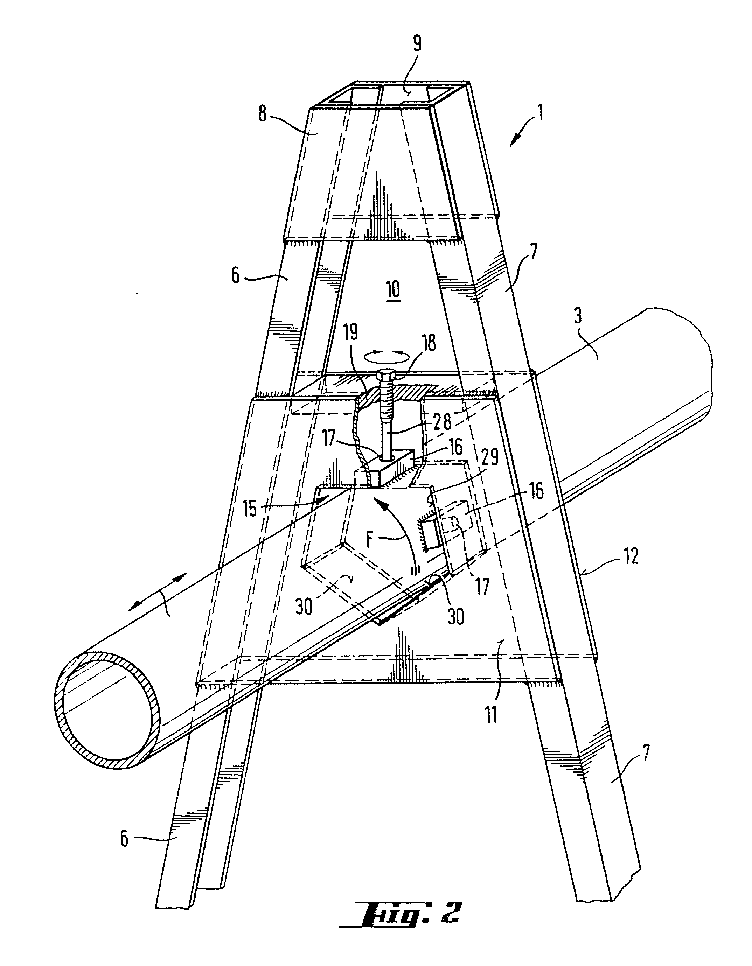

La structure qui sert à solidariser les longerons avec les bâtis est fondamentalement la même en tous les points d'assemblage. La figure 2 en montre, au niveau de la tête de l'un des bâtis, un exemple avantageux.

Les tôles 11 et 12 présentent chacune une découpe 15 à travers laquelle on introduit les longerons.

Le coussinet de support de chaque longeron est formé d'un tronçon de tube prismatique 30 soudé sur les tôles 11 et 12. A chacun des emplacements où il doit être assemblé sur un bâti 1, le longeron 3 porte un tenon de fixation formé d'un taquet soudé 16. Dans la direction de l'axe du tube, ce taquet possède une longueur correspondant à l'écartement interne des deux tôles 11 et 12; son épaisseur est de l'ordre de 1 à 2 cm; la forme, en l'occurrence pentagonale, des ouvertures 15 pratiquées dans les tôles 11 et 12 est telle qu'en au moins un emplacement, placé ici sur le côté, elles forment une lumière 29 à travers laquelle peut passer le tenon ainsi constitué. Aussitôt que celui-ci se trouve entre les deux tôles 11 et 12, on tourne suffisamment le longeron 3, dans le sens de la flèche F, pour l'amener vers le haut dans le plan de symétrie vertical.

Le tenon 16 porte un trou 17 où pénètre l'ergot 28 d'un goujon de verrouillage 18 se vissant dans la plaque de support 19, constituée d'un fer plat fixé sur les deux profilés 6 et 7 et aussi éventuellement sur les deux tôles 11 et 12.

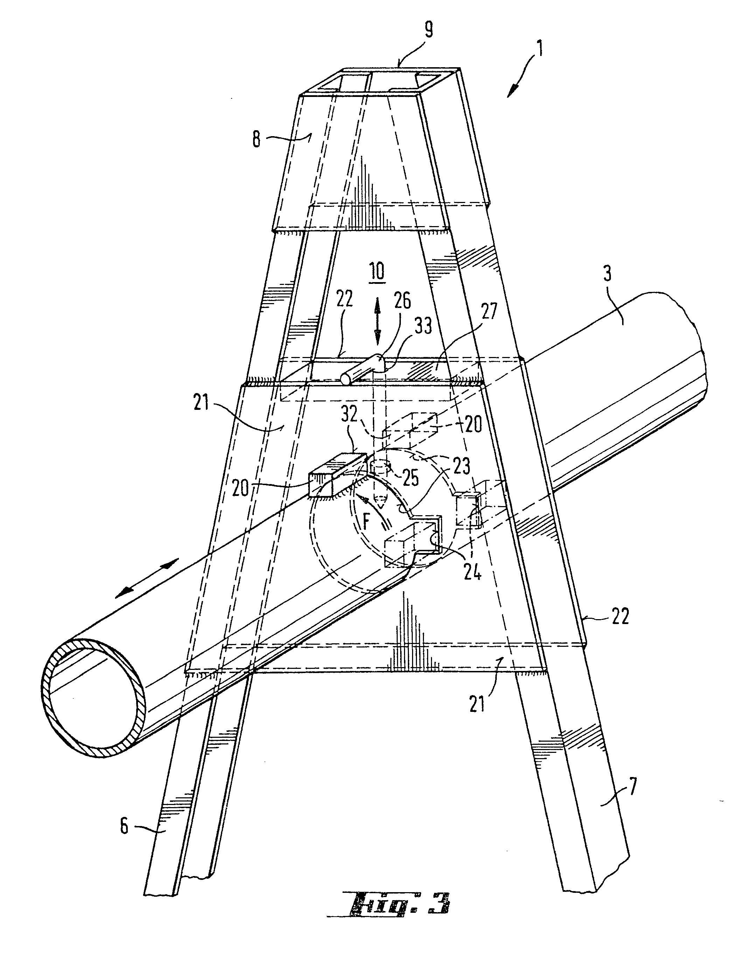

La figure 3 montre un autre mode d'exécution, dans lequel le glissement des longerons 3 dans la direction longitudinale est empêché par deux tenons 20 dont l'espacement correspond à l'encombrement externe de la zone couverte par les tôles 21 et 22. Chacune de ces dernières porte, pour recevoir le longeron 3, une découpe circulaire 23 complétée, en dehors de la position de verrouillage, par une échancrure 24 dont la forme correspond à la section transversale des tenons 20. Le longeron tubulaire 3 est introduit dans les ouvertures 23, en position angulaire telle que l'un des tenons puisse passer par les échancrures 24; aussitôt que les portées internes 32 des tenons 20 se trouvent dans le plan des faces externes des tôles 21, 22, on tourne le longeron 3 dans la direction de la flèche F, suffisamment pour que le perçage radial 25, qui se trouve à mi-distance entre les tenons 20, vienne se placer exactement vers le haut. On introduit alors dans ce perçage la goupille de verrouillage 26, en l'enfilant à travers un perçage 33 de la plaque de support 27, ce qui empêche le longeron 3 de tourner à l'intérieur de ses paliers. On obtient ainsi un blocage axial du bâti 1 sur les longerons 2 et 3 entre les tenons 20 sans exposer la goupille 26 à des efforts notables.

**Revendications**

1. Pupitre démontable pour le transport de piles de feuilles de verre, constitué d'au moins deux bâtis (1) en forme de A pourvus d'une semelle (4, 5) et de surface d'appui inclinees (6, 7), et reliés par au moins deux longerons tubulaires (2,3) qui y pénètrent pour s'y assembler de façon amovible à la partie inférieure et dans la région supérieure, caractérisé en ce que lesdits longerons (2, 3) sont munis, aux emplacements prévus pour cet assemblage, de tenons extérieurs (16, 20), que l'on peut introduire à travers des lumières correspondantes (29, 24) ménagées sur les ouvertures (15, 23) de pénétration à travers les bâtis (1) et mettre en prise longitudinale sur ces derniers par rotation du tube, à la manière d'un emboîêment à baïonnette, et en ce que les bâtis (1) portent un verrou (18, 26) immobilisant les longerons (2, 3) en rotation.

2. Pupitre de transport démontable selon la revendication 1, caractérisé en ce que les bâtis (1) possèdent une double paroi dans la région prévue pour l'assemblage des longerons (2, 3), la longuer des tenons (16) correspondant à l'écartement interne entre les deux faces (tôles 11, 12) de sorte que le tenon (16) vient intérieurement en contact contre celles-ci.

3. Pupitre de transport démontable démontable selon l'unes des revendications 1 et 2, caractérisé en ce que le verrou comprend un goujon (18, 26) vissé dans une plaque de support (19) appartenant au bâti pour pénétrer dans un trou (17) pratiqué à l'intérieur du tenon (16).

4. Pupitre de transport démontable selon l'une des revendications 1 à 3, caractérisé en ce que les bâtis portent des coussinets de support des longerons (3) formés de tronçons de tube prismatique (30).

5. Pupitre de transport démontable selon la revendication 1, caractérisé en ce que deux tenons (20) placés à distance sont prévus en chaque point de jonction des longerons (2, 3) pour venir en contact extérieur sur les tôles (21, 22) du bâti.

6. Pupitre de transport démontable selon l'une des revendications 1 ou 5, caractérisé en ce que le verrou en rotation des longerons (3) est formé d'une goupille (26) passant à travers une plaque de support (27) appartenant au bâti (1) pour pénétrer dans un perçage radial (25) du longeron.

**Patentansprüche**

1. Zerlegbares Transportgestell für Glasscheibenpakete, aus wenigstens zwei mit Abstand angeordneten A-förmigen Stützen (1) mit einem die hochkant stehenden Glasscheibenpakete tragenden Fuß (4, 5) und mit geneigten Anlageflächen (6, 7), und aus wenigstens zwei die Stützen im unteren und im oberen Bereich durchdringenden und mit diesen lösbar befestigten Verbindungsrohren (2, 3), dadurch gekennzeichnet, daß die Verbindungsrohre (2, 3) an den für die Befestigung an den Stützen (1) vorgesehenen Stellen außen mit Fixierungsnocken (16, 20) versehen sind, die durch diesen entsprechende Ausbuchtungen (29, 24) in den Durchtrittsöffnungen (15, 23) der Stützen (1) hindurchschiebbar sind, und durch Verdrehen der Rohre (2, 3) in Art eines Bajonettverschlusses mit den Stützen (1) in festen axialen Eingriff gebracht werden können, und daß die Stützen (1) eine Verdrehsicherung (18, 26) für die Verbindungsrohre (2, 3) tragen.

2. Zerlegbares Transportgestell nach Anspruch 1, dadurch gekennzeichnet, daß die Stützen (1) in dem für die Befestigung mit den Verbindungsrohren (2, 3) vorgesehenen Bereich doppelwandig ausgeführt sind, wobei die Länge der Fixierungsnocken (16) dem lichten inneren Abstand der beiden Wände (Blechabschnitte 11, 12) entspricht derart, daß der Fixierungsnocken (16) innen gegen die beiden Wände zu Anlage kommt.

3. Zerlegbares Transportgestellt nach einem der Ansprüche 1 und 2, dadurch gekennzeichnet, daß die Verdrehsicherung einen in einem an der Stütze (1) angeordneten Lagerstück (19) gelagerten Bolzen (18, 26) umfaßt, der in eine in dem Fixierungsnocken (16) angeordnete Bohrung (17) eingreift.

4. Zerlegbares Transportgestell nach einem der Ansprüche 1 bis 3, dadurch gekennzeichnet, daß die Stützen (1) Auflager für die Verbindungsrohre (3) in Form von prismatischen Rohrabschnitten (30) tragen.

5. Zerlegbares Transportgestell nach Anspruch 1, dadurch gekennzeichnet, daß auf den Verbindungsrohren (2, 3) an jeder Verbindungsstelle der Verbindungsrohre (2, 3) zwei im Abstand voneinander angeordneten Fixierungsnokken (20) angeordnet sind, die an den Blechabschnitten (21, 22) der Stütze (1) außen zur Anlage kommen.

6. Zerlegbares Transportgestell nach einem der Ansprüche 1 oder 5, dadurch gekennzeichnet, daß die Verdrehsicherung für die Verbindungsrohre (3) als Steckbolzen (26) ausgebildet ist, der eine an der Stütze (1) angeordnete Lagerplatte (27) durchdringt und in eine radiale Bohrung (25) in dem Verbindungsrohr eindringt.

**Claims**

1. A dismantlable support for transport of stacks of glass sheets, comprising at least two A-shaped frames (1) provided with a foot (4, 5) and inclined support surfaces (6, 7), and connected by at least two tubular longitudinal members (2, 3) which pass through them to assemble them together in dismantlable manner at their lower part and at their higher part, characterised in that said longitudinal members (2, 3) are provided, at locations provided for assembly, with exterior projections (16, 20) which may be inserted in corresponding apertures (29, 24) provided in the openings (15, 23) for passage of the members through the frames (1) and put in longitudinal engagement with the latter by rotation of the tube, in the manner of a bayonet fitting, and in that the frames (1) carry a bolt (18, 26) immobilising the longitudinal members (2, 3) with respect to rotation.

2. A dismantlable support for transport according to claim 1, characterised in that the frames (1) have a double wall in the part provided for assembly with the longitudinal members (2, 3), the lenght of the projections (16) corresponding to the internal separation between the two surfaces (sheets 11, 12) so that the projection (16) comes into interior contact with them.

3. A dismantlable support for transport according to one of claims 1 and 2, characterised in that the bolt comprises a pin (18, 26) screwed into a support plate (19) belonging to the frame to enter a hole (17) provided inside the projection (16).

4. A dismantlable support for transport according to one of claims 1 to 3, characterised in that the frames carry bearings for supporting the longitudinal members (3) comprising prismatic tube sections (30).

5. A dismantlable support for transport according to claim 1, characterised in that two projections (20) positioned at a distance from each other are provided at each point of joining with the longitudinal members (2, 3) to come exterior contact with the sheets (21, 22) of the frame.

6. A dismantlable support for transport according to one of claims 1 to 5, characterised in that the rotatable bolt of the longitudinal members (3) comprises a pin (26) passing through a support plate (27) of the frame (1) to enter a radial aperture (25) of the longitudinal member.

**Fig. 1**

0 056 751

**Fig. 2**

**Fig. 3**